Europäisches Patentamt

European Patent Office

Office européen des brevets

(19)

(11) Veröffentlichungsnummer : **0 114 627**
**B1**

(12) EUROPÄISCHE PATENTSCHRIFT

(45) Veröffentlichungstag der Patentschrift :
28.03.90

(21) Anmeldenummer : 84100350.2

(22) Anmeldetag : 14.01.84

(51) Int. Cl.⁵ : **G 01 S   5/14**, G 01 S 13/87

(54) Positionsbestimmungssystem.

(30) Priorität : 19.01.83 DE 3301613
              22.11.83 DE 3342030

(43) Veröffentlichungstag der Anmeldung :
01.08.84 Patentblatt 84/31

(45) Bekanntmachung des Hinweises auf die Patenterteilung : 28.03.90 Patentblatt 90/13

(84) Benannte Vertragsstaaten :
DE FR GB

(56) Entgegenhaltungen :
US-A- 4 229 737
NACHRICHTENTECHNISCHE          GESELLSCHAFT
N.T.Z., Band 35, Nr. 9, September 1982, Seiten 582-
587, Berlin, DE; D. ROTHER et al.: "GPS und Navex
für die satellitengestützte Navigation"
COLLOQUE INTERNATIONAL SUR LES SYSTEMES
ELECTRONIQUE   D'AIDE   A   LA   NAVIGATION
AERIENNE, 14.-18. November 1977, Seiten 300-306,
Paris, FR; C.L. BRITT Jr. et al.: "Development of a
microwave multilateration system for VTOL landing
guidance"
NAVIGATION-JOURNAL OF THE INSTITUTE OF NAVI-
GATION, Band 25, Nr. 2, Sommer 1978, Seiten 95-106,
New York, US; R.J. MILLIKEN et al.: "Principle of
Operation of NAVSTAR and system characteristics"

(73) Patentinhaber : ALCATEL N.V.
Strawinskylaan 537 (World Trade Center)
NL-1077 XX Amsterdam (NL)
FR GB
Standard Elektrik Lorenz Aktiengesellschaft
Hellmuth-Hirth-Strasse 42
D-7000 Stuttgart 40 (DE)
DE

(72) Erfinder : Höfgen, Günter, Dr.
Marderweg 8
D-7014 Kornwestheim (DE)
Erfinder : Brust, Gerhard
Erdmannhäuser Strasse 10
D-7140 Ludwigsburg (DE)

(74) Vertreter : Schmidt, Werner, Dipl.-Phys. et al
Standard Elektrik Lorenz AG Patent- und Lizenzwesen Postfach 30 09 29
D-7000 Stuttgart 30 (DE)

IEEE TRANSACTIONS OF COMMUNICATIONS, Band COM-30, Nr. 5, Teil 1, 5. Mai 1982, Seiten 1037-1047, New York, US; P.W. BAIER et al.: "A novel spread-spectrum receiver synchronization scheme using a SAW-tapped delay line"

ARCHIV FÜR ELEKTRONIK UND ÜBERTRAGUNGS-TECHNIK; Band 35, Nr. 4, April 1981, Seiten 151-155, Würzberg, DE; R. SKAUG: "Experiments with spread spectrum modulation on radiowaves reflected from the Ionosphere"

## Beschreibung

Die Erfindung geht aus von einem Positionsbestimmungssystem wie im Oberbegriff des Anspruchs 1 angegeben.

Ein solches Positionsbestimmungssystem ist beispielsweise das Global Positioning System (GPS), ein satellitengestütztes Navigationssystem, welches in den USA insbesondere für militärische Anwendung entwickelt wurde. Das GPS ist in NAVIGATION, Journal of the Institute of Navigation, GPS Special Issue, Band 25, Nr. 2 Sommer 1978, Seite 93-106 beschrieben.

Bei dem GPS umkreisen ständig etwa 18 Satelliten die Erde. Ein Erdumlauf erfolgt in 12 Stunden. Die Satelliten sind die Bezugsstationen für die Nutzer des Systems, die anhand der Positionen der Bezugsstationen und der Signallaufzeiten zu mindestens 4 Bezugsstationen ihre eigene Position ermitteln. Es ist eine Bodenkontrollstation vorgesehen, die an einem bestimmten Ort die Bahnen der einzelnen Satelliten genau vermißt. Die ermittelten Bahndaten werden zu den Satelliten übertragen. Zur Positionsbestimmung mißt ein Nutzer mittels Einwegentfernungsmessungen die Signallaufzeiten zu 4 Bezugsstationen. Theoretisch könnte die Position des Nutzers aus drei Entfernungen ermittelt werden. Da jedoch in der Praxis die Uhren stets Abweichungen von der Systemzeit aufweisen, erfolgen vier Messungen. Dann stehen zur Positionsbestimmung vier Gleichungen zur Verfügung und es ist möglich, außer den drei unbekannten Ortskoordinaten eine vierte Unbekannte, nämlich die Abweichung der Uhr des Nutzers von der Systemzeit, zu bestimmen.

Zur Positionsbestimmung ist es notwendig, daß der Nutzer die Position der Bezugsstationen genau kennt. Diese ermittelt er aus den Bahndaten der Satelliten, die von der Bodenkontrollstation zu den Satelliten und von dort zu dem Nutzer übertragen werden, und der Zeitdifferenz zwischen den Zeitpunkten, zu denen die Bahndaten für den jeweiligen Satelliten von der Bodenkontrollstation ermittelt wurden und dem Zeitpunkt, zu dem in der Nutzerstation aus den Bahndaten die Position der Bezugsstation (d. h. des Satelliten) ermittelt wird. Zur Funktionsfähigkeit des GPS ist es notwendig, daß alle Satelliten kontinuierlich in Betrieb sind. Die von den Satelliten abgestrahlten Signale sind mit unterschiedlichen Codes moduliert.

Aufgabe der Erfindung ist es, ein Positionsbestimmungssystem anzugeben, das kostengünstig realisierbar ist. Diese Aufgabe wird durch die Merkmale des Anspruchs 1 gelöst.

Die Bezugsstationen vermessen ihre Positionen selbst. Dadurch ist es möglich, die Positionen der Bezugsstationen mit kleinem Aufwand und mit großer Genauigkeit kostengünstig zu ermitteln. Es ist keine Bodenkontrollstation notwendig, die mit großem Aufwand die Bahndaten von vielen Satelliten sehr genau vermißt. Weiterhin sind sowohl in den Bezugs- als auch in den Nutzerstationen keine hochgenauen Uhren (z. B. Atomuhren) erforderlich.

Zur Bestimmung der Position der Satelliten erfolgen Zweiwegentfernungsmessungen zu mehreren Bodenstationen. Dadurch müssen (von jedem Satelliten aus) nur Entfernungen zu mindestens drei und nicht — wie es beim Einwegentfernungsmessverfahren der Fall ist — zu mindestens vier Bodenstationen durchgeführt werden. Weiterhin ist es dadurch möglich, die Position durch Schnitte von Kugelschalen und nicht von Rotationshyperboloiden zu bestimmen, was eine weitere Verbesserung der Genauigkeit bei der Positionsbestimmung ermöglicht.

Von diesen Bodenstationen aus ist nur zu einer begrenzten Anzahl von Bezugsstationen eine Sichtverbindung möglich. Die Bezugsstationen werden so gesteuert, daß sie ihre Signale im Zeitmultiplex abstrahlen. Dadurch müssen ihre Signale nicht voneinander unterscheidbar sein (die Signale aller Bezugsstationen können mit dem selben Code moduliert sein), was für den Nutzer eine Reduzierung des gerätetechnischen Aufwandes bedeutet. Weiterhin sind die Bezugsstationen verglichen mit dem bekannten Positionsbestimmungssystem nur eine wesentliche kleinere Zeit wirksam, wodurch sich der Energiebedarf stark verringert.

Bei einer hinreichend großen Zahl von Bodenstationen ist eine globale Bedeckung gegeben.

Das neue Positionsbestimmungssystem kann weiterhin so ausgebaut werden, daß eine Synchronisation der Uhren der Bezugsstationen sowie der Bodenstationen untereinander möglich ist.

Bei dem neuen Positionsbestimmungssystem ist es wichtig, daß die Ankunftszeit genau gemessen wird. Im Anspruch 12 und in dessen Weiterbildungen ist angegeben, wie die Ankunftszeit genau gemessen wird. Hierbei ist zu berücksichtigen, daß die Synchronisationspräambel ein Signal ist, das so moduliert ist, daß zeitlich aufeinanderfolgende Abschnitte dieses Signals voneinander unterschieden werden können.

Dies ist beispielsweise dadurch möglich, daß die aufeinanderfolgenden Abschnitte mit unterschiedlichen Pseudorauschsignalen moduliert sind oder daß einem einzigen Pseudorauschsignal ein weiteres Signal überlagert ist, das so gewählt ist, daß die einzelnen Abschnitte voneinander unterscheidbar werden.

Bei der neuen Lösung zur Messung der Ankunftszeit erfolgt zuerst eine mehrdeutige Messung der Ankunftszeit, die jedoch sehr schnell durchgeführt werden kann. Bei dieser « Schnellmessung » wird nicht berücksichtigt, welcher der oben genannten Abschnitte zur Messung herangezogen wurde. Danach folgt eine eindeutige Messung des Empfangszeitpunkts, bei der die « Numerierung » der einzelnen Abschnitte mit berücksichtigt wird. Dies hat den großen Vorteil, daß die Messung der Ankunftszeit insgesamt gesehen sehr schnell durchgeführt werden kann. Der dazu notwendige gerätetechnische Aufwand ist gering.

Die Erfindung wird anhand der Zeichnungen beispielsweise näher erläutert. Es zeigt:

Fig. 1 eine schematische Darstellung zur Erläuterung der Funktionsweise des neuen Positionsbestimmungssystems,

Fig. 2 die von den Bezugsstationen, Bodenstationen und der Nutzerstation abgestrahlten Signale,

Fig. 3 eine Skizze zur Erläuterung der Synchronisation der Uhren,

Fig. 4 ein Blockschaltbild zur Erläuterung der mehrdeutigen Synchronisation, und

Fig. 5 ein Blockschaltbild eines Empfangsgerätes. Zunächst wird anhand der Fig. 1 die Funktionsweise des Positionsbestimmungssystem erläutert.

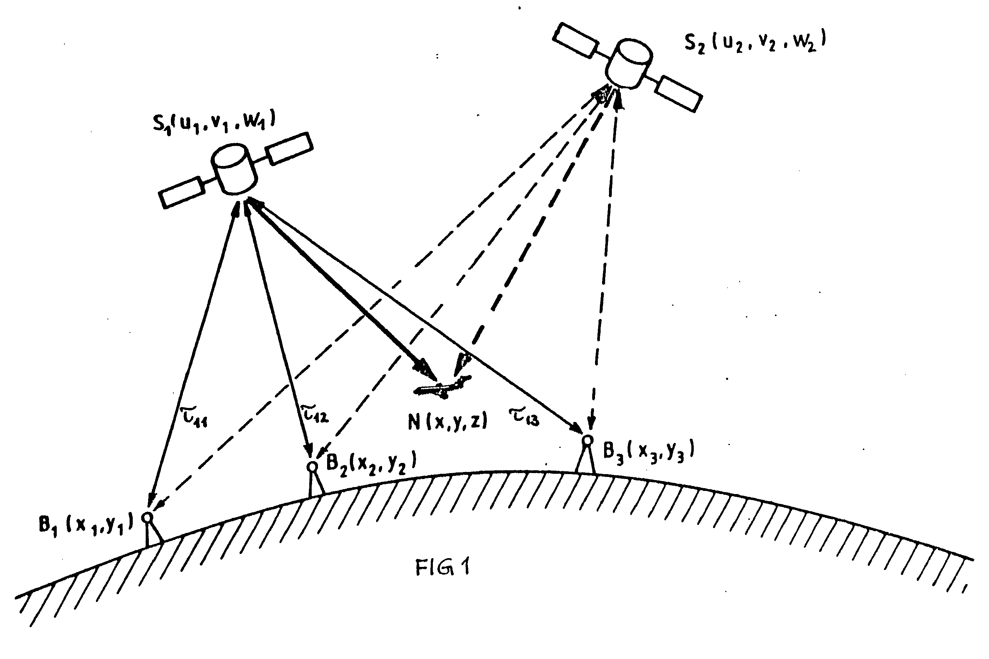

In der Fig. 1 sind drei Bodenstationen $B_1$, $B_2$, $B_3$, zwei Bezugsstationen $S_1$, $S_2$ und eine Nutzerstation N dargestellt. Zur Positionsbestimmung der Nutzerstation N sind mindestens vier Bezugsstationen $S_j$ notwendig. Zur Bestimmung der Positionen der Satelliten, die für die Positionsbestimmung einer Nutzerstation die Bezugsstationen sind, sind mindestens drei Bodenstationen $B_i$ erforderlich. Mit einer hinreichenden Zahl von Bodenstationen und ausreichend vielen Bezugsstationen erhält man eine globale Bedeckung. Die Bahnen der Satelliten und die Lage der Bodenstationen müssen so gewählt sein, daß zwischen der Nutzerstation zu mindestens vier Bezugsstationen eine Sichtverbindung möglich ist. Andererseits müssen diese mindestens vier Bezugsstationen jeweils zu mindestens je drei Bodenstationen (die für die vier Bezugsstationen nicht dieselben sein müssen) eine Sichtverbindung haben.

Jede Bezugsstation $S_j$ mißt mittels eines Zweiwegentfernungsmessverfahrens die Entfernungen zwischen der Bezugsstation und mindestens drei Bodenstationen $B_i$. Aus diesen Entfernungen und den bekannten Positionen der drei Bodenstationen wird in der Bezugsstation die eigene Position ermittelt. Die Antwortsignale der Bodenstationen enthalten unterschiedlich codierte Signale. Durch diese unterschiedlichen Signalcodes ($K_{Bi}$) sind in den Bezugsstationen die Bodenstationen identifizierbar. Die Positionen der Bodenstationen sind in den Bezugsstationen gespeichert.

Es ist auch möglich, die Entfernung zwischen einer Bezugsstation und einer Bodenstation in der Bodenstation zu ermitteln. Dann muß diese Information zur Bezugsstation übertragen werden.

Um den Energiebedarf in den Bezugsstationen gering zu halten, werden diese nicht ständig sondern während bestimmter Zeitintervalle innerhalb eines Zeitraumes (Rahmendauer) wirksam geschaltet. Hierbei geht man so vor, daß von den Bezugsstationen eines Bedeckungsbereichs nur jeweils eine wirksam ist, d. h. die Bezugsstationen werden in Zeitmultiplex betrieben. Dies hat weiterhin den Vorteil, daß die Signale aller Bezugsstationen mit dem selben Code $K_s$ moduliert sein können; die Empfänger der Nutzerstationen müssen dann ebenfalls nur einen Code verarbeiten können. Zur Steuerung der Satelliten, die, wie bereits erwähnt, die Bezugsstationen sind, ist eine zentrale Telemetriestation zweckmäßig. Über diese Telemetriestation erfolgt auch das Zuteilen der Reihenfolge für das Wirksamschalten der Bezugsstationen. In den Bezugsstationen werden die eigenen Positionen mittels Zweiwegentfernungsmessung ermittelt. Diese Positionen werden zu der Nutzerstation N in Form von Datenworten übertragen. Alternativ hierzu ist es auch möglich, die zur Positionsbestimmung notwendigen Daten (Laufzeiten oder Entfernungen zwischen Bezugs- und Bodenstationen) zur Nutzerstation zu übertragen und in der Nutzerstation die Positionen der Bezugsstationen zu bestimmen. Auf jeden Fall müssen zur Bestimmung der Position der Nutzerstation in der Nutzerstation die Positionen von mindestens vier Bezugsstationen bekannt sein. Zu diesen Bezugsstationen mißt die Nutzerstation mittels Einwegentfernungsmessungen die Pseudoentfernungen. Man erhält in an sich bekannter Weise vier Gleichungen mit den vier unbekannten x, y, z (der Position der Nutzerstation) und $\Delta t$ (der Abweichung der Uhr der Nutzerstation von der Systemzeit). Daraus lassen sich die Positionen der Nutzerstation und die Abweichungen der Uhr der Nutzerstation von der Systemzeit berechnen. Diese Einwegentfernungsmessungen und die Berechnungen der Positionen können auf die vom GPS bekannte Weise erfolgen.

Zur Einwegentfernungsmessung sind die von den Bezugsstationen abgestrahlten Signale mit einem Pseudo-Noise-Code (Pseudo-Noise ist nachfolgend mit PN abgekürzt) moduliert. Ein solcher PN-Code besteht aus einer Folge von 1023 Chips. Da die Bezugsstationen alle nacheinander und nicht gleichzeitig wirksam sind, können die Signale aller Bezugsstationen mit dem selben Code $K_s$ moduliert sein. Wie nachfolgend noch näher erläutert werden wird, werden zur Zweiwegentfernungsmessung ebenfalls mit einem PN-Code modulierte Signale verwendet. Hierbei ist jeder Bodenstation ein bestimmter Code $K_{Bi}$ zugeordnet.

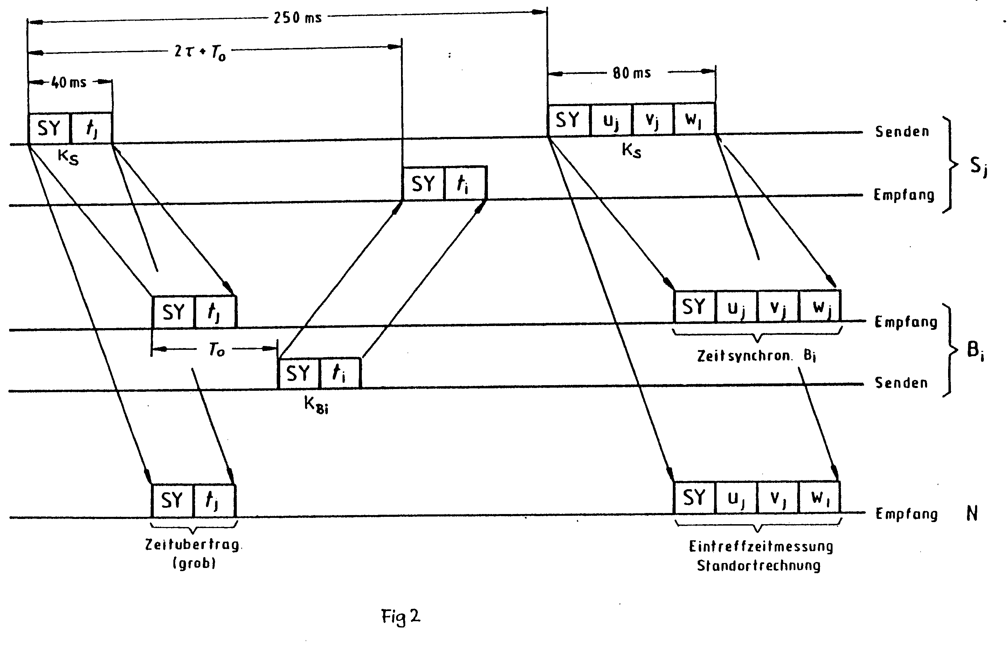

Anhand der Fig. 2 wird nachfolgend erläutert, wie die Zweiwegentfernungsmessung durchgeführt wird. Das zur Entfernungsmessung verwendete Abfragesignal hat eine Länge von 40 ms und ist in zwei 20 ms-Teile aufgeteilt. Der erste Teil ist eine Synchronisationspräambel SY und der zweite Teil enthält in codierter Form die Zeit $t_j$ der Bezugsstation.

Die Synchronisationspräambel wird durch eine Folge von Basissignalen (ein PN-Code bildet ein Basissignal) gebildet. Die Zeichen « 0 » oder « 1 », die in codierter Form die Zeit $t_j$ angeben, werden ebenfalls durch die Basissignale dargestellt und zwar durch das Basissignal direkt oder durch das invertierte Basissignal. Das Signal zur Zweiwegentfernungsmessung wird von einer Bodenstation $B_i$ empfangen und decodiert. Nach einer Zeit $T_0$ ($T_0 = 60$ ms) strahlt die Bodenstation ein Antwortsignal ab. Das Antwortsignal ist wie das Abfragesignal aufgebaut und enthält wiederum eine Synchronisationspräambel und in codierter Form die in der Bodenstation $B_i$ gemessene Eintreffzeit $t_i$ des von einer

4

Bezugsstation $S_j$ abgestrahlten Abfragesignals. Das Basissignal enthält den Code $K_{Bi}$. Das Antwortsignal wird von einer Bezugsstation $S_j$ nach der Zeit $2\tau_{ji} + T_0$ empfangen, wobei $\tau_{ji}$ die entfernungsabhängige Laufzeit zwischen der Bezugsstation $S_j$ und der Bodenstation $B_i$ ist. Aus der Zeit $\tau_{ji}$ wird auf an sich bekannte Weise die Entfernung ermittelt. Um Mehrdeutigkeiten bei der Entfernungsmessung zu vermeiden, wird, von der Bezugsstation zur Bodenstation die Zeit $t_j$ und von der Bodenstation zur Bezugsstation die Zeit $t_i$ übertragen. Es ist $\tau_{ji} = t_i - t_j - T_0 + \Delta t$.

Zu einem bestimmten Zeitpunkt ist von den Bezugsstationen, deren Signale von einem Nutzer empfangen werden können jeweils nur eine wirksam. Deshalb reicht es aus, für alle Bezugsstationen nur ein Basis-Signal, das einen Code $K_s$ enthält, vorzusehen. Das dieses Basissignal enthaltende Abfragesignal hingegen wird von mehreren Bodenstationen $B_i$ empfangen, die daraufhin nach jeweils $T_0$ ein Antwortsignal abstrahlen. Um die Antwortsignale der einzelnen Bodenstationen voneinander unterscheiden zu können, ist jeder Bodenstation $B_i$ ein individuelles Basissignal mit dem Code $K_{Bi}$ zugeordnet. Die Antwortsignale der einzelnen Bodenstationen werden von der Bezugsstation parallel verarbeitet. 250 ms nach Abstrahlung des Abfragesignals strahlt die Bezugsstation ein Signal ab, daß ähnlich dem Abfragesignal aufgebaut ist. Es enthält eine Synchronisationspräambel (Länge 20 ms) und drei weitere Signalteile mit ebenfalls 20 ms Länge. Diese weiteren Signalteile enthalten in codierter Form die Koordinaten $U_j$, $V_j$ und $W_j$ der Bezugsstation $S_j$. Das Basissignal enthält wiederum den Code $K_s$.

Mit diesem Signal werden von der Bezugsstation $S_j$ nicht nur deren Koordinaten zur Nutzerstation N übertragen, sondern dieses Signal wird von der Nutzerstation N zur Einwegentfernungsmessung zur jeweiligen Bezugsstation $S_j$ verwendet. Die Einwegentfernungsmessung erfolgt auf bekannte Weise durch Messung der Zeitdifferenz zwischen der Eintreffzeit in der Nutzerstation und dem Zeitpunkt, zu dem die Bezugsstation dieses Signal abgestrahlt hat. Um Abweichungen der Zeit in der Nutzerstation von der Systemzeit zu bestimmen, erfolgen Einwegentfernungsmessungen zu vier Bezugsstationen.

Das von der Bezugsstation zur Bodenstation abgestrahlte Abfragesignal wird auch von der Nutzerstation empfangen und decodiert. Somit ist in der Nutzerstation die Zeit $t_j$, zu der das Abfragesignal für die Zweiwegentfernungsmessung abgestrahlt wurde, grob bekannt. Da außerdem in der Nutzerstation die Entfernung zur Bezugsstation bekannt ist (mittels Einwegentfernungsmessung), kann diese Zeitinformation dazu verwendet werden grobe Zeitabweichungen zu erkennen und zu kompensieren.

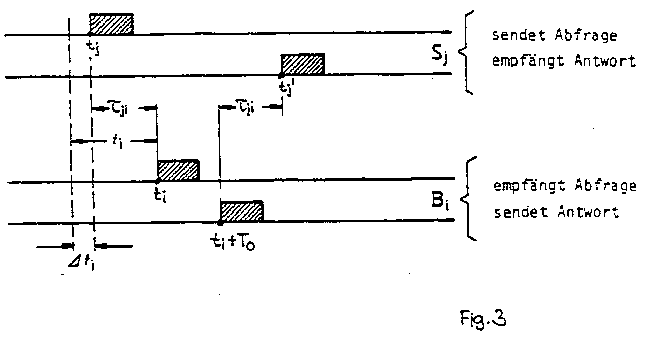

Bei dem neuen Positionsbestimmungssystem ist es in vorteilhafter Weise möglich, die Uhren, die sich sowohl in den Bezugsstationen $S_j$ in den Satelliten als auch in den Bodenstationen $B_i$ befinden, zu synchronisieren. Hierbei wird wie folgt vorgegangen (Fig. 3):

Die von den Uhren in den Bezugsstationen bzw. Bodenstationen angezeigten Zeiten werden nachfolgend als Zeit der Referenzstation $Z(S_j)$ und Zeit der Bodenstation $Z(B_i)$ bezeichnet.

Das Abfragesignal für die Zweiwegentfernungsmessung wird zum Zeitpunkt $t_j$ der Zeit $Z(S_j)$ von der Bezugsstation $S_j$ zur Bodenstation $B_i$ abgestrahlt und kommt dort nach der Laufzeit $\tau_{ji}$ an. Die Bodenstation zeigt die Zeit $t_i$ der Zeit $Z(B_i)$. Sind $Z(S_j)$ und $Z(B_i)$ miteinander synchronisiert, dann ist $t_i = t_j + \tau_{ji}$. Weicht die Zeit $t_i$ um $\Delta t_i$ von der Zeit der Bodenstation ab, dann ist $t_i = t_j + \Delta t_i + \tau_{ji}$. Das Antwortsignal kommt zum Zeitpunkt $t'_j$ in der Bezugsstation $S_j$ an. Es ist $t'_j - t_j = 2\tau_{ji} + T_0$. Da $T_0$ bekannt ist, läßt sich hieraus $\tau_{ji}$ berechnen. Damit ist $\Delta t_i = t_i - \tau_{ji} - t_j$ bestimmbar. Von jeder Bezugsstation $S_j$ wird zu mehreren Bodenstationen $B_i$ die Abweichung $\Delta t_i$ gemessen und anschließend wird der Mittelwert

$$\Delta t_k = \frac{1}{n}\sum_1^n \Delta t_i$$

ermittelt. Dieser Mittelwert gibt die Abweichung von der Systemzeit an.

In den Bezugsstationen steht jetzt die Systemzeit zur Verfügung. Dies ermöglicht wiederum den Bodenstationen, die Abweichung ihrer Zeit von der Systemzeit in ähnlicher Weise zu ermitteln. Es wird aus den Koordinaten der Bezugsstation ($u_j$, $v_j$, $w_j$), die zur Bodenstation übertragen werden, und den Koordinaten der Bodenstation die Entfernung zwischen den beiden Stationen ermittelt. Zur Bodenstation wird weiterhin der Zeitpunkt übertragen, zu dem die Bezugsstation das Signal abgestrahlt hat. Die Bodenstation mißt den Eintreffzeitpunkt dieses Signals. Aus diesen Werten wird ein Korrekturwert berechnet. Mit diesen Korrekturen steht sowohl in den Bezugs- als auch in den Bodenstationen die Systemzeit zur Verfügung.

Wie bereits erwähnt strahlen die Bezugsstationen ihre Signale im Zeitmultiplex ab. Jeweils 250 ms nach Abstrahlung des 40 ms langen Abfragesignals wird ein Signal, das die Koordinaten der Bezugsstation enthält, abgestrahlt. Bei weltweit 18 Satelliten, die die Erde auf verschiedenen Bahnen umlaufen, sind von einem Nutzer gleichzeitig zu maximal sechs Satelliten (Bezugsstationen) Sichtverbindungen möglich. Folglich müssen nur diese sechs Satelliten im Zeitmultiplex senden. Bei geeigneter Wahl der Umlaufbahn können jeweils drei Satelliten ihre Signale gleichzeitig abstrahlen. Folgendes Zeitraster ist möglich:

| Bezugsstation | Abstrahlzeitpunkt |
|---|---|
| $S_1, S_7, S_{13}$ | $T_R + 0$ ms |
| $S_2, S_8, S_{14}$ | $T_R + 90$ ms |
| $S_3, S_9, S_{15}$ | $T_R + 180$ ms |
| $S_4, S_{10}, S_{16}$ | $T_R + 520$ ms |
| $S_5, S_{11}, S_{17}$ | $T_R + 610$ ms |
| $S_6, S_{12}, S_{18}$ | $T_R + 700$ ms |

Dies ergibt eine Rahmendauer von 1 040 ms.

Für eine Gesamteuropäische Bedeckung reichen vier bis fünf Bodenstationen aus; für eine weltweite Bedeckung 18 bis 24 Bodenstationen.

Die Bezugsstationen bewegen sich zwischen den Messungen weiter. Der Einfluß der Bewegung auf die Messungen kann auf an sich bekannte Weise, z. B.: Bildung einer Spur, kompensiert werden (z. B. es erfolgen zwei Messungen zu unterschiedlichen Zeiten und es wird die Differenz gebildet. Dieser Wert wird zur Extrapolation in Bezug auf den Abstrahlzeitpunkt des Signals, das die Koordinaten der Bezugsstation enthält, verwendet. Dies Signal wird dann zu einem Zeitpunkt abgestrahlt, bei dem berücksichtigt ist, daß sich die Bezugsstation zwischen dem Zeitpunkt, zu dem sie ihre Position ermittelt hat, und dem Zeitpunkt, zu dem sie ihre Positionsdaten abstrahlt, weiterbewegt hat). Daß auch die Nutzerstation in Bewegung ist, muß im allgemeinen nicht berücksichtigt werden, da der dadurch bedingte Fehler in Relation auf die Meßgenauigkeit klein ist. Erfolgen die Messungen jedoch mit einer solchen Präzision, daß auch die Eigenbewegung der Nutzerstation berücksichtigt werden muß, dann erfolgt dies sinngemäß wie bei der Bezugsstation.

Bedingt durch die Eigenbewegung der Bezugsstationen ist die Trägerfrequenz eines von einer Bezugsstation abgestrahlten Signals um die Frequenz $f_D$ dopplerverschoben. Diese Dopplerverschiebung wird in der Bodenstation, die dieses Signal empfängt, ermittelt. Das von der Bodenstation wieder abgestrahlte Signal wird gegenüber der Sollfrequenz der Bodenstation um die inverse gemessene Dopplerverschiebung — $f_D$ verschoben, d. h. bei dem von der Bezugsstation empfangenen Signal ist keine Dopplerverschiebung mehr enthalten. Dadurch läßt sich der Aufbau der Bezugsstationen vereinfachen.

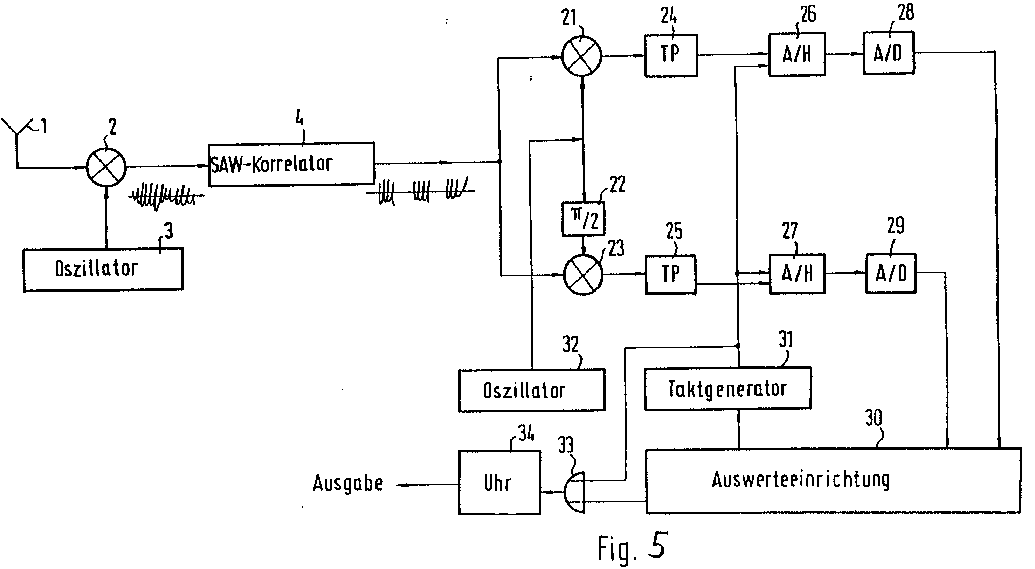

Bei dem oben beschriebenen Positionsbestimmungssystem ist es unter anderem notwendig, mittels Einwegentfernungsmessung die Entfernung zwischen zwei Stationen zu bestimmen. Bei der Einwegentfernungsmessung wiederum ist es notwendig, den Empfangszeitpunkt des Signals genau zu messen. Mit dem anhand der Fig. 5 beschriebenen Empfangsgerät ist dies sehr genau möglich. Auf die sonst noch notwendigen Maßnahmen zur Messung der Entfernung aus der Differenz von Zeitpunkten wird hier nicht näher eingegangen, da dies an sich bekannt ist.

Bei dem oben beschriebenen System enthält das Signal, das zur Einwegentfernungsmessung verwendet wird, eine Synchronisationspräambel. Die Synchronisationspräambel ist ein Signal, das so moduliert ist, daß zeitlich aufeinanderfolgende Abschnitte dieses Signals voneinander unterschieden werden können, wie bereits in der Beschreibungseinleitung erwähnt.

Bei der nachfolgenden Beschreibung zur Messung der Ankunftszeit wird zunächst davon ausgegangen, daß dieses Signal mit einem einzigen Pseudorauschsignal moduliert ist, welches wiederum so moduliert ist, daß einzelne zeitlich aufeinanderfolgende Abschnitte voneinander unterschieden werden können. Zur Messung der Ankunftszeit erfolgen im wesentlichen zwei Auswertungsvorgänge. Es müssen einerseits die von einem Taktgenerator abgegebenen Signale mit den einzelnen Abschnitten des empfangenen Signals synchronisiert werden, wodurch man eine Freinmessung erhält, und andererseits muß noch dafür Sorge getragen werden, daß der Ankunftszeitpunkt eindeutig bestimmt wird.

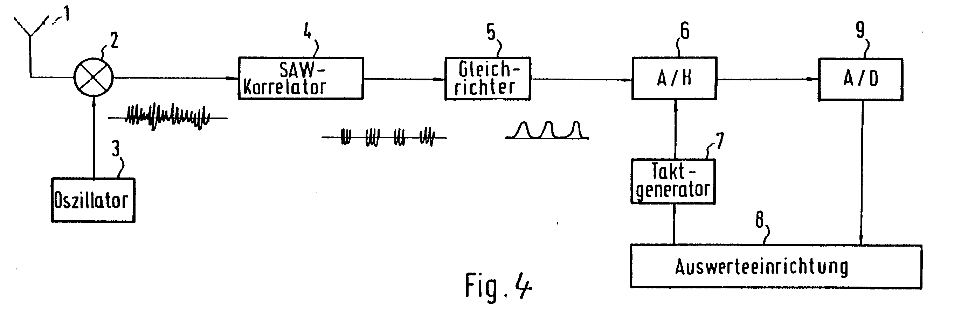

Anhand der Fig. 4 wird erläutert, wie die zur Feinmessung notwendige Synchronisation zwischen den Ausgangssignalen des Taktgenerators und den Abschnitten des empfangenen Signals durchgeführt wird. Das Signal wird von einer Antenne 1 empfangen und in einem Mischer 2 mit einem in einem Oszillator 3 erzeugten Signal in die ZF-Lage heruntergemischt. Das Ausgangssignal des Mischers 2, das ein pseudorauschmoduliertes Signal in der ZF-Lage ist (diesem Signals ist noch eine weitere Modulation, die die einzelnen Abschnitte des empfangenen Signals voneinander unterscheidbar macht, überlagert), wird einem SAW-Korrelator 4 zugeführt. In dem SAW-Korrelator ist der Code, der die Aufeinanderfolge der einzelnen Abschnitte in dem empfangenen Signal bestimmt, eingeprägt. Das Ausgangssignal des SAW-Korrelators ist ein impulsförmiges Signal; die Trägerschwingung dieses Signals ist die ZF-Frequenz. Zwischen den einzelnen Impulsen ist außer einem evtl. vorhandenen Rauschen kein Signal vorhanden. Dieses Signal wird in einem Gleichrichter 5 gleichgerichtet und dessen Ausgangssignal wird einer Abtast- und Halteschaltung 6 zugeführt. Deren Ausgangssignal wird nach Analog-Digital-Wandlung 9 einer Auswerteeinrichtung 8 zugeführt. Die Auswerteeinrichtung 8 steuert die Phasenlage eines Taktgenerators 7, welcher die Abtasthalteschaltung 6 steuert. Zur Synchronisation der Ausgangssignale des Taktgenerators 7 mit den einzelnen Abschnitten des empfangenen Signals wird wie folgt vorgegangen:

Es wird ausgegangen von dem gerade vorhandenen Phasenzustand des Taktgenerators. Bei diesem Phasenwert wird über eine bestimmte Anzahl von Abtastwerten die Summe gebildet. Überschreitet diese Summe einen vorgegebenen Schwellwert, dann ist das empfangene Signal bereits richtig aufgenommen (akquiriert). Ist dies nicht der Fall, so wird die Phase des Taktgenerators um kleine Schritte weitergeschaltet. Bei jedem Schritt erfolgt eine Aufsummierung über eine vorgegebene Anzahl Ausgangssignale der Abtasthalteschaltung. Das empfangene Signal ist bei dem Phasenwert akquiriert, bei dem die Summe zum erstenmal den bereits erwähnten Schwellwert überschreitet. Nach der Akquisition des Signals wird nochmals um einen Phasenwert weitergeschaltet und aus der Differenz der Amplituden wird ein Signal zur genauen Einstellung der Synchronisation gewonnen. Während nämlich während der Akquisitionsphase die Veränderung der Phase in größeren Schritten erfolgte, wird sie hier zur genauen Synchronisation um kleinere Schritte verändert.

Nach dieser Synchronisation ist zwar erreicht, daß das empfangene Signal synchron ist zu dem Ausgangssignal des Taktgenerators, jedoch ist hiermit noch nicht die Messung der Ankunftszeit des zur Einwegentfernungsmessung auszuwertenden Signales möglich, weil die Synchronisation noch kein eindeutiges Meßergebnis liefert.

Anhand der Fig. 5 wird erläutert, wie die eindeutige Ankunftszeit gemessen wird. Wie in der Fig. 4 wird auch hier das Signal von einer Antenne 1 empfangen und in einem Mischer 2 mit einem Mischsignal, das in einem Oszillator 3 erzeugt wurde, gemischt. Das heruntergemischte Signal wird einem SAW-Korrelator 4 zugeführt. Das Ausgangssignal des SAW-Korrelators wird sowohl einem ersten Mischer 21 als auch einem zweiten Mischer 23 zugeführt. In den beiden Mischern werden die beiden Signalanteile mit dem in einem Oszillator 32 erzeugten Signal gemischt. Dieses Mischsignal wird dem Mischer 21 direkt und dem Mischer 23 um π/2 phasenverschoben zugeführt. Die Ausgangssignale der beiden Mischer werden jeweils über Tiefpässe 24 und 25 Abtast- und Halteschaltungen 26 und 27 zugeführt. Die Tiefpässe 24 und 25 dienen dazu, die unerwünschten hochfrequenten Signalanteile auszufiltern. Gleichzeitig wird dadurch eine gewisse Mittelwertbildung über einen Impuls erzeugt. Die Abtast- und Halteschaltungen 26 und 27 werden von den Ausgangssignalen eines Taktgenerators 31 gesteuert. Die Ausgangssignale der Abtast- und Halteschaltungen werden in Analog-Digital-Wandler 28 und 29 digitalisiert. Die digitalisierten Werte werden einer Auswerteeinrichtung 30 zugeführt. Die Auswerteeinrichtung 30 sorgt zunächst für die Synchronisation der Ausgangssignale des Taktgenerators 31 mit den einzelnen Abschnitten des empfangenen Signals wie bereits anhand der Fig. 4 erläutert. Im Gegensatz zu dem Ausführungsbeispiel nach Fig. 4 ist bei dem Ausführungsbeispiel nach Fig. 5 kein Gleichrichter für die Ausgangssignale des SAW-Korrelators vorgesehen. Statt dessen werden zur Nachbildung des Gleichrichters die Ausgangssignale der Analog-Digital-Wandler zunächst quadriert, danach addiert und schließlich wird aus der Summe die Wurzel gezogen. Im übrigen erfolgt die Regelung wie anhand der Fig. 4 erläutert.

Als nächstes wird erläutert, wie man zu einer eindeutigen Messung zur Ankunftszeit des auszuwertenden Signals gelangt. Die einzelnen voneinander unterscheidbaren Abschnitte des empfangenen Signals unterscheiden sich durch ihre Phase. Es werden vorzugsweise Phasenwerte von 0° und 180° gewählt. Deshalb wird bei der Auswertung wieder ermittelt, welche Phasenwerte vorliegen. Hierzu wird der Quotient der Ausgangssignale der Analog-Digital-Wandler 28 und 29 gebildet. Dieser Quotient enthält die Phaseninformation. Die Phase erhält man durch Bildung des Arcus Tangens des Quotienten unter Berücksichtigung des Vorzeichens von mindestens einem der beiden Ausgangssignale der Analog-Digital-Wandler. Es werden nacheinander mehrere Phasenwerte ermittelt, d. h. man erhält eine Folge von Phasenwerten. Diese Folge von Phasenwerten wird mit dem Kode, der in der Empfangsstation gespeichert ist, verglichen.

Man erhält beispielsweise eine Folge von Phasenwerten : 0°, 0°, 180°, 0°, 180°, 180°, 180°, 0°.

Der gespeicherte Kode sei die Folge der Phasenwerte : − 90°, − 90°, + 90°, − 90°, + 90°, + 90°, + 90°, − 90° :

Vergleicht man diese beiden Folgen von Phasenwerten, so stellt man fest, daß die Winkeldifferenz immer den gleichen Differenzwinkel ergibt. Sind die beiden Phasenwinkelfolgen zeitlich gegeneinander verschoben, dann erhält man nicht stets dieselben Differenzwerte. Durch Vergleich der beiden Folgen ist es möglich zu erkennen, an welcher Stelle des Kodes (bei welcher « Nummer ») man sich befindet. Dies wiederum macht es möglich, innerhalb des empfangenen Kodes eine bestimmte Stelle für die Abgabe eines Triggersignals zu definieren. Dieses Triggersignal (Grobmessung der Ankunftszeit) und das Ausgangssignal des Taktgenerators 31 (mehrdeutige Feinmessung) werden einer UND-Schaltung 33 zugeführt, deren Ausgangssignal das Auslesen der Zeit aus einer Uhr 34 auslöst. Die ausgelesene Zeit ist die Ankunftszeit des Signals, die zur Einwegentfernungsmessung ausgewertet wird.

Es ist möglich, daß dem empfangenen Signal eine Doppler-Verschiebung überlagert ist. Dies zeigt sich beispielsweise darin, daß die oben gemessene Folge von Phasenwerten nicht die Phasenwerte 0°, 0°, 180°, 0° usw. aufweist, sondern daß Phasenwerte 0°, 5°, 190°, 15° gemessen werden. Aus der Abweichung der gemessenen Phasenwerte von den zu erwartenden Phasenwerten kann die Dopplerverschiebung ermittelt werden. Es ist nun einerseits möglich, die Dopplerverschiebung bei der Auswertung rechnerisch zu berücksichtigen oder die Frequenz des Mischoszillators 3, mit dem das empfangene Signal gemischt wird, so zu ändern, daß das Ausgangssignal des Mischers 2 eine konstante Frequenz aufweist.

Es wurde oben davon ausgegangen, daß sich die einzelnen Abschnitte des empfangenen Signals durch ihre Phase unterscheiden. Statt dessen ist es auch möglich, für die einzelnen Abschnitte unterschiedliche Pseudorauschkodes zu wählen. In diesem Fall reicht es nicht aus, empfangsseitig nur einen Korrelator vorzusehen, sondern es muß für jeden Pseudorauschkode ein Korrelator vorgesehen werden. Dementsprechend sind auch die nachfolgenden Schaltungen mehrfach vorhanden.

Bei der obigen Beschreibung wurde davon ausgegangen, daß zur Synchronisation lediglich die Synchronisationspräambel ausgewertet wurde. Eine Synchronisation ist jedoch auch mit dem anderen Signalteil möglich, vorausgesetzt, diesem ist derselbe Pseudorauschkode unterlegt.

Anstelle zur Auswertung die Quotienten der Ausgangssignale der Analog-Digital-Wandler zu bilden, kann auch eine Fourier-Auswertung durchgeführt werden. Es wird zunächst die Fourier-transformierte der Ausgangssignale gebildet und diese Fouriertransformierte wird mit der konjugiert komplexen Fouriertransformierten für den gespeicherten Kode multipliziert. Aus dem Produkt läßt sich direkt die Phasenlage der empfangenen Phasenwinkelwerte in Bezug auf die Phasenwinkelwerte des gespeicherten Kodes und die Dopplerverschiebung des empfangenen Signals schließen.

Zum Schluß noch eine Bemerkung zum Positionsbestimmungssystem insgesamt: Mittels der neuen Einrichtung zur Ermittlung der Ankunftszeit ist es in besonders vorteilhafter Weise möglich, die Ankunftszeit auch aus einem sehr kurzen Signal genau zu bestimmen. Die neue Lösung macht die Verwendung der SAW-Technologie möglich, was wiederum die Möglichkeit bietet, die Empfangseinrichtung preiswert und vorwiegend in digitaler Technik zu realisieren.

## Patentansprüche

1. System zum Bestimmen der Position einer Nutzerstation am Ort dieser Station anhand der Entfernung dieser Nutzerstation zu mehreren in Satelliten befindlichen und in Sichtverbindung mit der Nutzerstation stehenden Bezugsstationen (Sj) und anhand der bekannten Positionen dieser Bezugsstationen, in welchem System jede Bezugsstation mit einem Sender zur Abstrahlung von Hochfrequenzsignalen und die Nutzerstation mit einem Empfänger und mit Meßeinrichtungen zum Empfang der Hochfrequenzsignale sowie zur Ermittlung der Entfernung zum jeweiligen Sender durch Einwegentfernungsmessung ausgestattet ist, dadurch gekennzeichnet, daß die Bezugsstationen (Sj) Steuerungsmittel enthalten, durch welche die Abstrahlung von Hochfrequenzsignalen so gesteuert wird, daß von den mit der Nutzerstation in Sichtverbindung stehenden Bezugsstationen zu einer bestimmten Zeit jeweils nur eine im Wechsel mit den anderen Bezugsstationen wirksam ist, daß in den Bezugsstationen Meßmittel zur Bestimmung der Entfernung zwischen jeder Bezugsstation (Sj) und jeweils mehrere Bodenstationen (Bj) mit jeweils bekannte Positionen mittels Zweiwegentfernungsmessungen vorgesehen sind, daß in einer Abfragestation, der Bezugs- oder der Bodenstation Abfragemittel enthalten sind und in einer Antwortstation, der Boden- oder der Bezugsstation Antwortmittel enthalten sind, damit Abfragesignale von der Abfragestation und Antwortsignale von der Antwortstation abgestrahlt werden, und daß Verarbeitungsmittel vorgesehen sind, um die Positionen einer Bezugsstation durch den Schnitt von Kugelschalen, um die Bodenstationen zu ermitteln, wobei die Radien der Kugelschalen die Entfernungen zwischen der jeweiligen Bodenstation und der betroffenen Bezugsstation sind.

2. Positionsbestimmungssystem nach Anspruch 1, dadurch gekennzeichnet, daß die betroffenen Bezugsstationen mit Meßmitteln zur Bestimmung ihrer eigenen Position versehen sind und daß Mittel vorgesehen sind, die diese Position zur Nutzerstation übertragen.

3. Positionsbestimmungssystem nach Anspruch 1, dadurch gekennzeichnet, daß die Bezugsstationen die gemessenen Entfernungen zwischen Bezugs- und Bodenstation oder diesen Entfernungen entsprechende gemessene Laufzeiten zu der Nutzerstation übertragen und daß die Nutzerstation Rechenmittel enthält, die die Positionen der Bezugsstationen ermitteln.

4. Positionsbestimmungssystem nach einem der Ansprüche 1 bis 3, dadurch gekennzeichnet, daß die Abfrage- bzw. die Antwortsignale jeweils aus zwei Signalteilen (Fig. 2) bestehen, wobei der jeweils erste Teil eine Synchronisationspräambel (SY) ist und der jeweils zweite Teil angibt, wann das Abfragesignal von der Abfragestation abgestrahlt ($t_j$) bzw. von der Antwortstation empfangen ($t_i$) wurde.

5. Positionsbestimmungssystem nach einem der Ansprüche 1 bis 4, dadurch gekennzeichnet, daß die Abfrage- und die Antwortsignale aus einer Folge von gleichen Basis-Signalen ($K_s$, $K_{Bi}$), die jeweils einen Pseudozufallcode bilden, bestehen.

6. Positionsbestimmungssystem nach Anspruch 5, dadurch gekennzeichnet, daß zur Unterscheidung der Zeichen 0 und 1, die in codierter Form die Abstrahl- bzw. Ankunftszeitpunkte der Abfragesignale als Datenwort angeben, das Basis-Signal direkt oder invertiert vorhanden ist.

7. Positionsbestimmungssystem nach Anspruch 5 oder 6, dadurch gekennzeichnet, daß die Basis-Signale (KS) für alle Bezugsstationen gleich sind und daß jeder Bodenstation ein individuelles Basis-Signal (KBi) zugeordnet ist.

8. Positionsbestimmungssystem nach einem der Ansprüche 1 bis 7, dadurch gekennzeichnet, daß die Bezugsstationen jeweils eine bestimmte Zeit nach Abstrahlung eines Abfragesignals ein Signal abstrahlen, das eine Synchronisationspräambel (SY) und in codierter Form entweder die Koordinaten der Bezugsstation ($u_j$, $v_j$, $w_j$) oder die Entfernungen dieser Bezugsstationen zu mehreren Bodenstationen, oder den Entfernungen entsprechende Laufzeiten, einschließlich der Koordinaten der Bodenstation, enthält.

9. Positionsbestimmungssystem nach einem der Ansprüche 4 bis 8, dadurch gekennzeichnet, daß die Laufzeiten der Signale zwischen den Abfrage- und Antwortstationen und die übertragenen Zeiten, die angeben, wann das Abfragesignal von der Abfragestation abgestrahlt bzw. das abgestrahlte Signal von der Antwortstation empfangen wurde, zur Synchronisation der Uhren in den Bezugsstationen verwendet werden.

10. Positionsbestimmungssystem nach Anspruch 9, dadurch gekennzeichnet, daß die Bodenstation Korrekturmittel enthält, die aus der Entfernung zwischen einer Bezugsstation und einer Bodenstation, den Zeitpunkten, zu denen die Bezugsstation ein Signal abstrahlt und die Bodenstation dieses Signal empfängt, und der Laufzeit dieses Signales einen Korrekturwert zur Korrektur der Uhr in der Bodenstation ermitteln.

11. Positionsbestimmungssystem nach einem der Ansprüche 1 bis 10, dadurch gekennzeichnet, daß die Bodenstationen Rechenmittel enthalten, die jeweils die Dopplerverschiebung (fD) des in der Bodenstation empfangenen Abfragesignales ermitteln und daß die Bodenstation Steuermittel enthält, die die Frequenz des von der Bodenstation abgestrahlten Antwortsignales um die inverse Dopplerverschiebung gegenüber der Sollsendefrequenz verschieben.

12. Positionsbestimmungssystem nach Anspruch 5, dadurch gekennzeichnet, daß das in der Nutzerstation empfangene Signal nach einer Umsetzung in die ZF-Lage einem als Korrelator verwendeten akustischen Oberflächenwellenfilter (4) zugeführt wird, in dem der Pseudozufallscode, mit dem das empfangene Signal moduliert ist, eingeprägt ist, daß das impulsförmige Ausgangssignal des Korrelators, dessen Trägerschwingung das ZF-Signal ist, zwei Mischern (21, 23) zugeführt wird, in denen diese Signale mit einem in einem Oszillator (32) erzeugten Signal, dessen Frequenz die Frequenz des in die ZF-Lage umgesetzten Signales ist, gemischt werden, und zwar in einem ersten Mischer (21) mit dem Mischsignal direkt und in einem zweiten Mischer (23) mit dem um 90° phasenverschobenen Mischsignal, daß die Mischerausgangssignale über Tiefpässe (24, 25) jeweils einer Abtast/Halte-Schaltung (26, 27), die ein Taktgenerator (31) steuert, zugeführt werden, deren Ausgangssignale Analog/Digital-Wandlern (28, 29) in digitale Signale umwandeln, daß diese Signale wahlweise einer Auswerteeinrichtung (30) zugeleitet werden, daß Phasenverschiebungsmittel vorgesehen sind, die die Phase des Taktgenerators (31) abhängig von den Ausgangssignalen der Analog/Digital-Wandler so lange verschieben, bis die Ausgangssignale des Taktgenerators (31) und das Ausgangssignal des Korrelators (4) zeitlich zusammenfallen (koinzidieren), daß in der Auswerteeinrichtung die zeitliche Lage des Codes, mit dem das in der Nutzerstation empfangene Signal moduliert ist, aus den Ausgangssignalen der Abtast/Halte-Schaltungen ermittelt wird, daß die Auswerteeinrichtung dann ein Triggersignal abgibt, wenn eine bestimmte Stelle des Pseudozufallscodes erreicht ist, und daß eine UND-Schaltung (33) vorgesehen ist, der dieses Triggersignal und das Ausgangssignal des Taktgenerators zugeführt werden, wobei das Ausgangssignal der UND-Schaltung (33) das Auslesen der Zeit aus einer Uhr (34) auslöst.

13. Positionsbestimmungssystem nach Anspruch 12, dadurch gekennzeichnet, daß Mittel vorgesehen sind, die die Ausgangssignale der Analog/Digital-Wandler zunächst quadrieren, danach addieren und schließlich die Wurzel aus der Summe ziehen.

14. Positionsbestimmungssystem nach Anspruch 12 oder Anspruch 13, dadurch gekennzeichnet, daß Mittel vorgesehen sind, die die Quotienten aus den Ausgangssignalen der Analog/Digital-Wandler bilden und die aus den arc tan-Werten dieser Quotienten die Phaseninformation, die den Kode charakterisiert, ermitteln.

15. Positionsbestimmungssystem nach Anspruch 14, dadurch gekennzeichnet, daß die Mittel, die die Quotienten aus den Ausgangssignalen der Analog/Digital-Wandler bilden, zusätzlich aus den Quotienten eine Phaseninformation ermitteln, die zur Doppler-Verschiebung des in der Nutzerstation empfangenen Signales proportional ist.

16. Positionsbestimmungssystem nach Anspruch 15, dadurch gekennzeichnet, daß in der Nutzerstation das empfangene Signal durch ein von einem Ortsoszillator (3) erzeugtes Signal in die ZF-Lage umgesetzt wird, und daß Mittel vorgesehen sind, die die Frequenz dieses Ortsoszillators, der das Mischersignal zum Heruntermischen in die ZF-Lage abgibt, um die Doppler-Frequenz verschieben.

17. Positionsbestimmungssystem nach Anspruch 12 oder Anspruch 13, dadurch gekennzeichnet, daß Mittel vorgesehen sind, die die Fouriertransformierte einer Folge von Abtastwerten bilden und daraus die Dopplerverschiebung des empfangenen Signals ermitteln und/oder diese zur Synchronisation auswerten.

## Claims

1. System for determining the position of a user station at said station from the ranges from said station to several reference stations (Sj) which are carried by satellites and are within sight of the user station, and from the known positions of said reference stations, in which system each reference station is equipped with a transmitter for transmitting radio-frequency signals and the user station is equipped with a receiver for receiving the radio-frequency signals and with measuring devices for determining the range to the respective transmitter by one-way ranging, characterized in that the reference stations (Sj) include control means which control the transmission of radio-frequency signals in such a way that only one of the reference stations within sight of the user station is active in alternation with the other reference stations at any given time, that the reference stations include measuring means for determining the ranges from each measuring station (Sj) to each of several ground stations (Bj) with known positions by two-way ranging, that an interrogator station, the reference or ground station, includes interrogating means, while a transponder station, the ground or reference station, includes responding means, so that interrogation signals are transmitted by the interrogator station, and and reply signals by the transponder station, and that processing means are provided for determining the positions of a reference station from the intersection of spherical surfaces around the ground stations, the radii of the spherical surfaces being the distances between the respective ground station and the respective reference station.

2. A position-determining system as claimed in claim 1, characterized in that the reference stations are provided with measuring means for determining their own positions, and that means are provided for transmitting said positions to the user station.

3. A position-determining system as claimed in claim 1, characterized in that the reference stations transmit the measured distances between reference and ground station, or measured signal transit times corresponding to said distances to the user station, and that the user station includes computing means for determining the positions of the reference stations.

4. A position-determining system as claimed in any one of claims 1 to 3, characterized in that the interrogation signals and the reply signals each consist of two parts (Fig. 2) the first of which is a synchronization preamble (SY), and the second of which indicates when the interrogation signal was transmitted ($t_j$) from the interrogator station and received ($t_i$) by the transponder station, respectively.

5. A position-determining system as claimed in any one of claims 1 to 4, characterized in that the interrogation and reply signals consist of a sequence of like basic signals ($K_s$, $K_{Bi}$) each forming a pseudorandom code.

6. A position-determining system as claimed in claim 5, characterized in that to distinguish between the characters 0 and 1, which specify the times of transmission and arrival of the interrogation signals in coded form as a data word, the basic signal is present directly or in inverted form.

7. A position-determining system as claimed in claim 5 or 6, characterized in that the basic signals (KS) are the same for all reference stations, and that each ground station is assigned an individual basic signal (KBi).

8. A position-determining system as claimed in any one of claims 1 to 7, characterized in that a given time after transmission of each interrogation signal, the reference stations transmit a signal containing a synchronization preamble (SY) and, in coded form, either the coordinates of the reference station ($u_j$, $v_j$, $w_j$) or the ranges from said reference stations to several ground stations, or signal transit times corresponding to said ranges, including the coordinates of the ground station.

9. A position-determining system as claimed in any one of claims 4 to 8, characterized in that the transit times of the signals between the interrogator and transponder stations and the transmitted times, which indicate when the interrogation signal was transmitted from the interrogator station and received by the transponder station, are used to synchronize the clocks in the reference stations.

10. A position-determining system as claimed in claim 9, characterized in that the ground station includes correcting means whereby a correction value for correcting the clock at the ground station is determined from the distance between a reference station and a ground station, the instants at which the reference station transmits a signal and at which the ground station receives said signal, and the delay of said signal in the ground station.

11. A position-determining system as claimed in any one of claims 1 to 10, characterized in that the ground stations include computing means for determining the Doppler shift ($f_D$) of the interrogation signal received at the ground station, and that the ground station includes control means whereby the frequency of the reply signal transmitted from the ground station is shifted by the inverse Doppler shift with respect to the nominal transmission frequency.

12. A position-determining system as claimed in claim 5, characterized in that the signal received at the user station, after being converted to the IF value, is applied to a surface-acoustic-wave filter (4) used as a correlator in which the pseudorandom code with which the received signal is modulated is impressed, that the output pulse signal of the correlator, whose carrier wave is the IF signal, is applied to two mixers (21, 23) in which these signals are mixed with a signal generated by an oscillator (32) and having a frequency equal to that of the signal converted to the IF value, said oscillator signal being applied to one of the mixers (21) directly and to the other (23) after being shifted in phase by 90°, that the output signal of each of the mixers is applied through a low-pass filter (24, 25) to a sample- and hold circuit (26, 27) which is controlled by a clock generator (31) and whose output signal is changed to a digital signal in an analog-to-digital converter (28, 29), that these signals are fed to an evaluating unit (30), that phase-shifting means are provided which, in response to the output signals of the analog-to-digital converters, shift the phase of the clock generator (31) until the output signal of the clock generator (31) and the output signal of the correlator (4) coincide in time, that in the evaluating unit, the time position of the code with which the received signal is modulated is derived from the output signals of the sample-and-hold circuits, that the evaluating unit delivers a trigger signal when a given point of the pseudorandom code is reached, and that an AND gate (33) is provided to which said trigger signal and the output signal of the clock generator are applied, with the output of the AND gate (33) initiating the readout of the time from a clock (34).

13. A position-determining system as claimed in claim 12, characterized in that means are provided which first square the output signals of the analog-to-digital converters, then add the results, and finally extract the root of the sum.

14. A position-determining system as claimed in claim 12 or 13, characterized in that means are provided which form the quotients of the output signals of the analog-to-digital converters and determine the phase information characterizing the code from the arctan values of said quotients.

15. A position-determining system as claimed in claim 15, characterized in that the means for forming the quotients of the output signals of the analog-to-digital converters additionally derive phase information from said quotients which is proportional to the Doppler shift of the signal received at the user station.

16. A position-determining system as claimed in claim 15, characterized in that at the user station, the received signal is converted to the IF value by a signal generated by a local oscillator (3), and that means are provided for shifting the frequency of said local oscillator by the value of the Doppler frequency.

17. A position-determining system as claimed in claim 12 or 13, characterized in that means are provided for computing the Fourier transform of a sequence of sample values and deriving the Doppler shift of the received signal therefrom and/or for evaluating it for synchronization purposes.

**Revendications**

1. Système de détermination de position d'une station utilisatrice sur l'emplacement de cette station, à l'aide de l'éloignement de cette station utilisatrice vis-à-vis de plusieurs stations de référence (Sj) se trouvant dans des satellites et en liaison optique avec la station utilisatrice et à l'aide des positions connues de ces stations de référence, système dans lequel chaque station de référence est équipée d'un émetteur en vue d'émettre des signaux à haute fréquence et la station utilisatrice est équipée d'un récepteur et de dispositifs de mesure en vue de recevoir les signaux à haute fréquence ainsi que pour déterminer l'éloignement par rapport à chaque émetteur par une mesure d'éloignement unidirectionnel, caractérisé en ce que les stations de référence (Sj) contiennent des moyens de commande à l'aide desquels l'émission des signaux à haute fréquence est commandée de manière telle qu'en provenance des stations de référence placées à liaison optique de la station utilisatrice, il n'y ait à un certain moment qu'une station qui soit activée en alternance avec les autres stations de référence, en ce que dans les stations de référence sont prévus des moyens de mesure en vue de déterminer, à l'aide de mesures d'éloignement bidirectionnel, l'éloignement entre chaque station de référence (Sj) et chaque fois plusieurs stations au sol (Bj) ayant chacune des positions connues, en ce que des moyens d'interrogation de la station de référence ou de la station au sol sont prévus dans une station d'interrogation, et que des moyens de réponse sont contenus dans une station de réponse, la station au sol ou la station de référence, afin que soient émis des signaux d'interrogation provenant de la station d'interrogation et les signaux de réponse provenant de la station de réponse, et en ce que des moyens de traitement sont prévus afin de déterminer les positions d'une station de référence par l'intersection de surfaces sphériques, autour des stations au sol, les rayons des surfaces sphériques constituant les éloignements entre chaque station au sol et la station de référence concernée.

2. Système de détermination de position selon la revendication 1, caractérisé en ce que les stations de référence concernées sont pourvues de moyens de mesure en vue de déterminer leur position propre et en ce que des moyens sont prévus pour transmettre cette position à la station utilisatrice.

3. Système de détermination de position selon la revendication 1, caractérisé en ce que les stations de référence transmettent à la station utilisatrice les éloignements mesurés entre station de référence et station au sol ou les temps de parcours mesurés correspondant à ces éloignements et en ce que la station utilisatrice comporte des moyens de calcul déterminant les positions des stations de référence.

4. Système de détermination de position selon l'une quelconque des revendications 1 à 3, caractérisé en ce que les signaux d'interrogation et de réponse se composent chacun de deux parties de signaux (figure 2), dont chaque première partie est un préambule de synchronisation (Sy) et dont chaque deuxième partie donne l'instant où le signal d'interrogation a été émis par la station d'interrogation ($t_j$) ou par la station de réponse ($t_i$).

5. Système de détermination de position selon l'une quelconque des revendications 1 à 4, caractérisé en ce que les signaux d'interrogation et de réponse se composent d'une succession de signaux de base ($K_S$, $K_{Bi}$) identiques, formant chacun un pseudo-code aléatoire.

6. Système de détermination de position selon la revendication 5, caractérisé en ce qu'en vue de distinguer les chiffres 0 et 1, indiquant sous forme codée les moments d'émission et d'arrivée des signaux d'interrogation sous la forme de mots de données, le signal de base est présent sous forme directe ou inversée.

7. Système de détermination de position selon la revendication 5 ou 6, caractérisé en ce que les signaux de base (KS) sont identiques pour toutes les stations de référence et en ce qu'un signal de base individuel (KBi) est associé à chaque station au sol.

8. Système de détermination de position selon l'une quelconque des revendications 1 à 7, caractérisé en ce que les stations de référence émettent chacune, un certain temps après émission d'un signal d'interrogation, un signal qui contient un préambule de synchronisation (SY) et, sous forme codée, soit les coordonnées de la station de référence ($u_j$, $v_j$, $w_j$), soit les éloignements de ces stations de référence par rapport à plusieurs stations au sol, soit les temps de parcours correspondant aux éloignements, y compris les coordonnées de la station au sol.

9. Système de détermination de position selon l'une quelconque des revendications 4 à 8, caractérisé en ce que les temps de parcours des signaux entre les stations d'interrogation et les stations de réponse et les temps transmis, qui indiquent quand le signal d'interrogation a été émis par la station d'interrogation ou quand le signal émis a été reçu par la station de réponse, sont utilisés en vue de la synchronisation des horloges situées dans les stations de référence.

10. Système de détermination de position selon la revendication 9, caractérisé en ce que la station au sol contient des moyens de correction déterminant une valeur de correction pour corriger l'horloge située dans la station au sol, à partir de l'éloignement entre une station de référence et une station au sol, à partir des instants auxquels la station de référence émet un signal et auxquels la station au sol reçoit ce signal, et du temps de parcours de ce signal, et à partir du temps de parcours de ce signal.

11. Système de détermination de position selon l'une quelconque des revendications 1 à 10, caractérisé en ce que les stations au sol contiennent des moyens de calcul qui déterminent chaque fois le décalage Doppler ($f_D$) du signal d'interrogation reçu dans la station au sol, et en ce que la station au sol contient des moyens de commande décalant, par rapport à la fréquence finale théorique, la fréquence du signal de réponse émis depuis la station au sol, de la valeur du décalage Doppler inverse.

12. Système de détermination de position selon la revendication 5, caractérisé en ce que le signal reçu dans la station utilisatrice est amené, après une conversion en position ZF, à un filtre d'ondes de surface (4) acoustique utilisé comme corrélateur, dans lequel est influencé le pseudo-code aléatoire à l'aide duquel est modulé le signal reçu, en ce que le signal de sortie du corrélateur, dont la vibration porteuse est le signal ZF, est amené à deux mélangeurs (21, 23) dans lesquels ces signaux sont mélangés à un signal produit dans un oscillateur (32), dont la fréquence est la fréquence du signal converti en position ZF, et à savoir dans un premier mélangeur (21), directement au signal de mélange, et dans un deuxième mélangeur (23), avec le signal de mélange décalé en phase de 90°, en ce que les signaux de sortie des mélangeurs sont chacun amenés, par l'intermédiaire de filtres passe-bas (24, 25), à un circuit de balayage/maintien (26, 27) commandant un générateur de rythme (31), dont les signaux de sortie sont convertis en signaux numériques par des convertisseurs analogique/numérique (28, 29), en ce que ces signaux sont amenés au choix à un dispositif d'exploitation (30), en ce que des moyens de décalage de phase sont prévus et décalent la phase du générateur de rythme (31) en fonction des signaux de sortie des convertisseurs analogique/numérique, jusqu'à ce que les signaux de sortie du générateur de rythme (31) et le signal de sortie du corrélateur (4) coïncident temporellement, en ce que, dans le dispositif d'exploitation, la position temporelle du code, à l'aide duquel le signal reçu dans la station utilisatrice est modulé, est déterminée à partir des signaux de sortie des circuits de balayage/maintien, en ce que le dispositif d'exploitation délivre ensuite un signal de déclenchement lorsqu'un emplacement déterminé du pseudo-code aléatoire est atteint, et en ce qu'il est prévu un circuit ET (33) auquel sont amenés ce signal de déclenchement et le signal de sortie du générateur de rythme, le signal de sortie du circuit ET (33) déclenchant la lecture du temps à partir d'une horloge (34).

13. Système de détermination de position selon la revendication 12, caractérisé en ce que des moyens sont prévus qui élèvent tout d'abord au carré les signaux de sortie des convertisseurs analogique/numérique, puis additionnent et finalement extraient la racine carrée de la somme.

14. Système de détermination de position selon la revendication 12 ou la revendication 13, caractérisé en ce que des moyens sont prévus qui forment les quotients à partir des signaux de sortie des convertisseurs analogique/numérique et déterminent à partir des valeurs d'arc tangente de ces quotients les informations de phase caractérisant le code.

15. Système de détermination de position selon la revendication 14, caractérisé en ce que les moyens formant les quotients à partir des signaux de sortie des convertisseurs analogique/numérique déterminent en plus à partir des quotients une information de phase proportionnelle au décalage Doppler du signal reçu dans la station utilisatrice.

16. Système de détermination de position selon la revendication 15, caractérisé en ce que le signal reçu est converti dans la station utilisatrice par un signal produit par un oscillateur local (3), en une position ZF, et en ce que les moyens sont prévus qui décalent de la valeur de la fréquence Doppler la fréquence de cet oscillateur local, qui délivre le signal mélangé en vue d'en extraire la position ZF.

17. Système de détermination de position selon la revendicaion 12 ou la revendication 13, caractérisé en ce que des moyens sont prévus pour former la transformée de Fourier d'une succession de valeurs lues et en déterminer le décalage Doppler du signal reçu et/ou exploiter ce décalage en vue de la synchronisation.

FIG 1

Fig 2

Fig.3

sendet Abfrage
empfängt Antwort

$S_j$

empfängt Abfrage
sendet Antwort

$B_i$

Fig. 4

1 (antenna)

2 (mixer)

3 Oszillator

4 SAW-Korrelator

5 Gleich-richter

6 A/H

7 Takt-generator

8 Auswerteeinrichtung

9 A/D

EP 0 114 627 B1

Fig. 5